# EUROPEAN PATENT APPLICATION

(11) **EP 2 685 517 A1**
(43) Date of publication of application: **15.01.2014**
(21) Application number: 13175548.0
(22) Date of filing: 08.07.2013
(51) Int. Cl.: H01M 2/02, H01M 2/06, H01M 2/34, H01M 10/0587

(54) **A soft-package lithium battery edge fold structure**

(30) Priority: 10.07.2012 CN 201210237239
(71) Applicant: Dongguan Amperex Technology Limited, North Zone of SSL Sci. & Tech. Industry Park Dongguan city, Guangdong 523808 (CN); NingDe Amperex Technology Limited, 352100 Ningde City Fujian (CN)
(72) Inventor: Lianghai, Liu, Guangdong (HK); Hongxing, Fang, Guangdong (HK); Yaohui, Wang, Guangdong (HK); Baiqing, Zhang, Guangdong (HK); Xiaohua, Zhang, Guangdong (HK)
(74) Representative: Hellmich, Wolfgang

(57) **Abstract**

The invention discloses a soft-package lithium battery edge fold structure, comprising a side edge of a soft-package lithium battery and a double edge fold folded by using a packing aluminum foil of the cell of the soft-package lithium battery, wherein a glue layer is arranged between the double edge fold and the side edge, one side of the glue layer is glued with the side edge, while the other side of the glue layer is glued with the double edge fold. The invention has the advantages in that edge glue is needless, capable of preventing metal in the position of scrap edge from out leakage, preventing width of the battery cell at a fixed side edge from increasing, and being easier for realization of automatic production than usually applying edge glue.

## Description

The invention relates to the technology field of a soft-package lithium battery, in particular to a soft-package lithium battery edge fold structure.

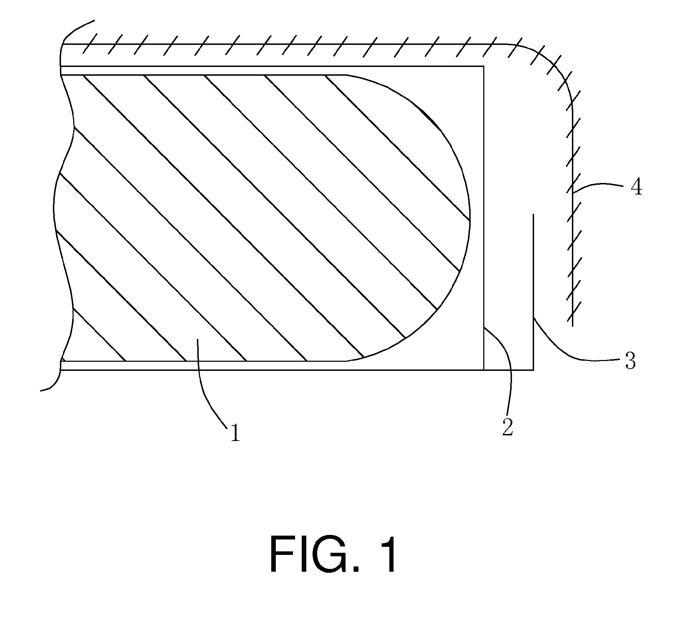

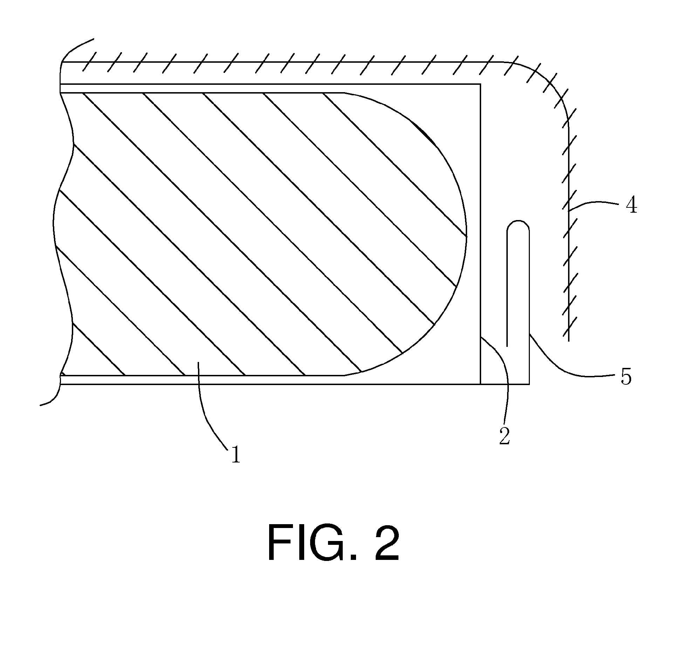

In the conventional soft-package structure, in order to prevent a battery cell from corrosion or short circuit, a plurality of methods are adopted to envelop the exposed aluminum layer of a battery edge sealing resulted from scrap edge. Fig. 1 shows the structure of a conventional single edge fold fixed by applying edge glue, a battery cell body 1 forms a battery cell side wall 2 after being encapsulated by a packaging aluminum foil, a single edge fold 3 is formed by folding an encapsulation stamp, at last, the single edge fold 3 is fixed on the side wall 2 by using a layer of adhesive tape 4 with single-sided glue so as to guarantee good insulation of the scrap edge and prevent the single edge fold 3 from stretching. Fig. 2 shows the structure of a double edge fold 5 folded by the single edge fold, which can guarantee a smaller edge fold height can be formed under the condition of sufficient width of the encapsulation stamp.

Both structures shown in Fig. 1 and Fig. 2 have a disadvantage in that the edge glue needs applying to the battery cell body 1, thereby increasing the thickness thereof. The market has a higher and higher requirement for battery volume energy density. Just shown as Fig. 3, a patent for invention (Chinese patent number: 201120192837.2) discloses a soft-package lithium battery edge sealing fixed structure, in which, exposed metal at the encapsulation stamp is subject to insulated isolation by using an edge glue 6, the edge glue 6 is cohered on the battery cell side wall by using a glue. However, the structure has a high requirement for automation of equipment, with a high cost for manufacturing the edge glue but a low yield and productivity.

The invention aims at, in allusion to disadvantages of the prior art, providing a soft-package lithium battery edgefold structure and a making method thereof, capable of improving the volume energy density of the battery cell, reducing production cost by canceling the edge glue, and raising efficiency of automatic production and yield of products.

For achieving the objective, the invention provides a soft-package lithium battery edge fold structure with such a technical scheme as below:

A soft-package lithium battery edge fold structure, comprising a side edge of a soft-package lithium battery and a double edge fold folded by using a packing aluminum foil of the cell of the soft-package lithium battery, wherein a glue layer is arranged between the double edge fold and the side edge, one side of the glue layer is glued with the side edge, while the other side of the glue layer is glued with the double edge fold.

The double edge fold comprises a first edge fold and a second edge fold, in which, the first edge fold is close to the side edge.

The first edge fold has a minimum length more than 0.5mm, and the length of the first edge fold is less than that of the second edge fold.

The external side of the first edge fold is 0.2-1.0mm far away from that of the second edge fold.

One side of the glue layer is glued with the side edge, while the other side of the glue layer is glued with the internal side of the first edge fold.

One side of the glue layer is glued with the side edge, and the first edge fold is embedded into the glue layer.

One side of the glue layer is glued with the side edge, while the other side of the glue layer is glued with the internal side of the second edge fold.

The height of the double edge fold is less than or equal to that of the soft-package lithium battery.

The height of the double edge fold is larger than that of the soft-package lithium battery.

The invention has a beneficial effect in that: a double edge fold structure is adopted for a side of the soft-package lithium battery, the double edge fold is fixed by the glue layer on the lateral of the soft-package lithium battery, the edge glue is cancelled for reducing production cost, meanwhile the volume energy density of the battery cell is improved, and the efficiency of automatic production and yield of products are raised.
Fig. 1 is a structure diagram of structure of a single edge fold of an existing soft-package lithium battery lateral;
Fig. 2 is a structure diagram of structure of a double edge fold of an existing soft-package lithium battery lateral;

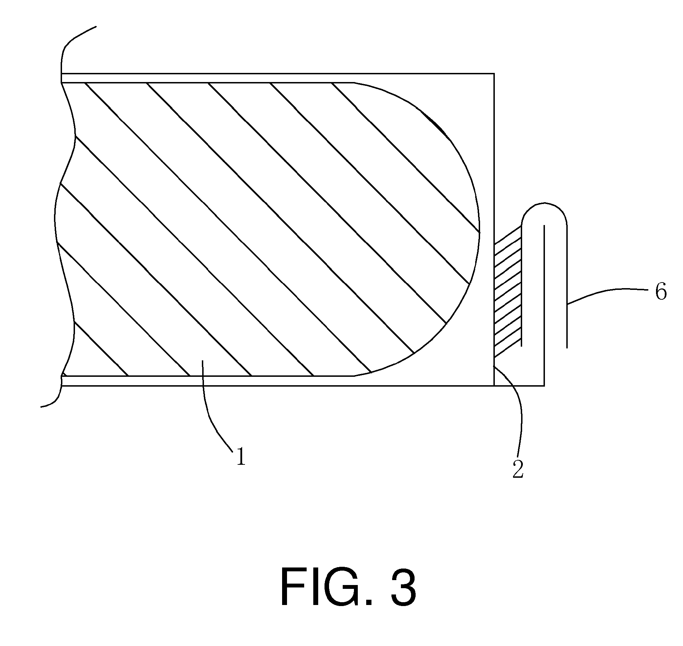

Fig. 3 is a structure diagram of the fixed structure of an existing soft-package lithium battery edge sealing;

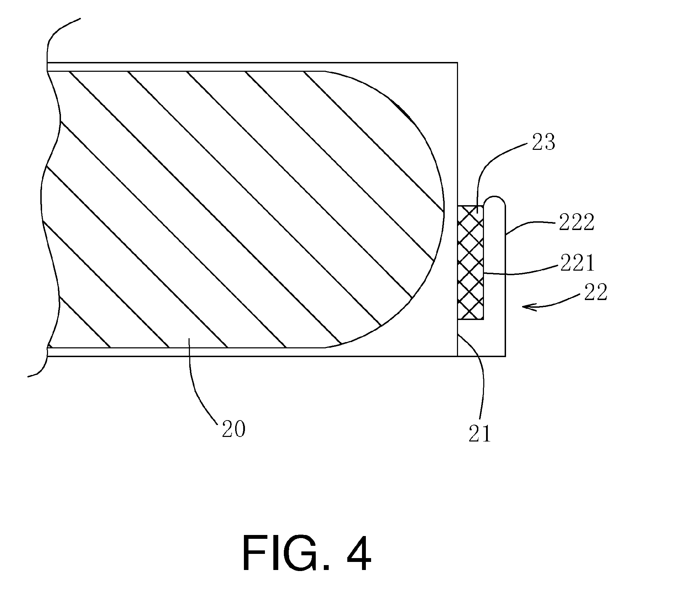

Fig. 4 is a structure diagram of the embodiment 1 of a soft-package lithium battery edge fold structure in the invention;

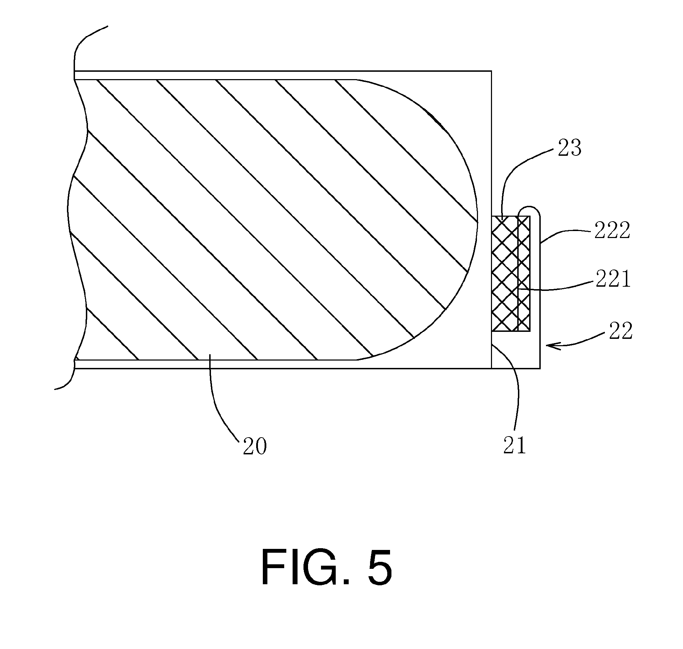

Fig. 5 is a structure diagram of the embodiment 2 of a soft-package lithium battery edge fold structure in the invention; and

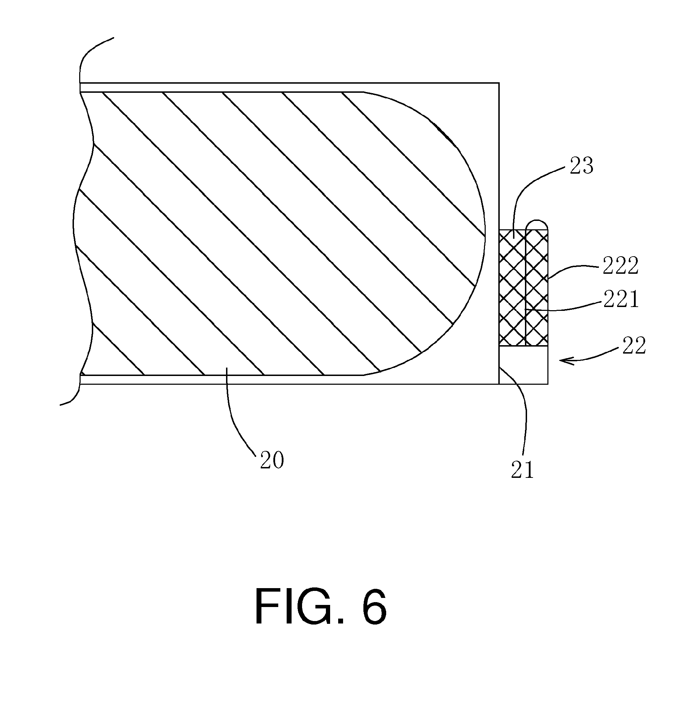

Fig. 6 is a structure diagram of the embodiment 3 of a soft-package lithium battery edge fold structure in the invention.

Fig. 4 shows the embodiment 1 of a soft-package lithium battery edge fold structure in the invention, comprising a side edge 21 of the soft-package lithium battery 20 and a double edge fold 22 folded by using a packing aluminum foil of the cell of the soft-package lithium battery 20, wherein a glue layer 23 is arranged between the double edge fold 22 and the side edge 21, one side of the glue layer 23 is glued with the side edge 21, while the other side of the glue layer 23 is glued with the double edge fold 33.

The double edge fold 22 comprises a first edge fold 221 and a second edgefold 222, in which, the first edge fold 221 is close to the side edge 21.

Preferably, the first edge fold 221 has a minimum length more than 0.5mm, and the length of the first edge fold 221 is less than that of the second edge fold 222.

Preferably, the external side of the first edge fold 221 is 0.2-1.0mm far away from that of the second edge fold 222.

5 In the embodiment, one side of the glue layer 23 is glued with the side edge 21, while the other side of the glue layer 23 is glued with the internal side of the first edge fold 221.

Preferably, the height of the double edge fold 22 is less than or equal to that of the soft-package lithium battery 20; of course, under the condition of specific requirement, the height of the double edge fold 22 can be more than that of the soft-package lithium battery 20.

Fig. 5 shows the embodiment 2 of the invention. Different from the embodiment 1, in the embodiment 2, one side of the glue layer 23 is glued with the side edge 21, and the first edge fold 221 is embedded into the glue layer 23, other structures of the embodiment 2 are the same as those of the embodiment 1, not repeated any more.

Fig. 6 shows the embodiment 3 of the invention. Different from the embodiment 1, in the embodiment 3, one side of the glue layer 23 is glued with the side edge 21, while the other side of the glue layer 23 is glued with the internal side of the second edge fold 222, other structures of the embodiment 3 are the same as those of the embodiment 1, not repeated any more.

### Reference list

- 1: battery cell body
- 2: battery cell side wall
- 3: single edge fold
- 4: adhesive tape
- 5, 22: double edge fold
- 6: edge glue
- 20: soft-package lithium battery
- 21: side edge
- 23: glue layer
- 221: first edge fold
- 222: second edgefold

## Claims

1. A soft-package lithium battery (20) edge fold structure, comprising a side edge (21) of a soft-package lithium battery (20) and a double edge fold (5, 22) folded by using a packing aluminum foil of the cell of the soft-package lithium battery (20), wherein a glue layer (23) is arranged between the double edge fold (5, 22) and the side edge (21), one side of the glue layer (23) is glued with the side edge (21), while the other side of the glue layer (23) is glued with the double edge fold (5, 22).

2. The soft-package lithium battery (20) edge fold structure of claim 1, wherein the double edge fold (5, 22) comprises a first edge fold (221) and a second edge fold, in which, the first edge fold (221) is close to the side edge (21).

3. The soft-package lithium battery (20) edge fold structure of claim 2, wherein the first edge fold (221) has a minimum length more than 0.5mm, and the length of the first edge fold (221) is less than that of the second edge fold.

4. The soft-package lithium battery (20) edge fold structure of one of claims 1 to 3, wherein the external side of the first edge fold (221) is 0.2-1.0mm far away from that of the second edge fold.

5. The soft-package lithium battery (20) edge fold structure of one of claims 1 to 4, wherein one side of the glue layer (23) is glued with the side edge (21), while the other side of the glue layer (23) is glued with the internal side of the first edge fold (221).

6. The soft-package lithium battery (20) edge fold structure of one of claims 1 to 5, wherein one side of the glue layer (23) is glued with the side edge (21), and the first edge fold (221) is embedded into the glue layer (23).

7. The soft-package lithium battery (20) edge fold structure of one of claims 1 to 6, wherein one side of the glue layer (23) is glued with the side edge (21), while the other side of the glue layer (23) is glued with the internal side of the second edge fold.

8. The soft-package lithium battery (20) edge fold structure of one of claims 1 to 7, wherein the height of the double edge fold (5, 22) is less than or equal to that of the soft-package lithium battery (20).

9. The soft-package lithium battery (20) edge fold structure of one of claims 1 to 8, wherein the height of the double edge fold (5, 22) is larger than that of the soft-package lithium battery (20).
